# EUROPEAN PATENT APPLICATION

(11) **EP 2 348 083 A2**
(43) Date of publication of application: **27.07.2011**
(21) Application number: 11151555.7
(22) Date of filing: 20.01.2011
(51) Int. Cl.: C09J 7/02

(54) **Protective sheet and use thereof**

(30) Priority: 25.01.2010 JP 2010013026
(71) Applicant: NITTO DENKO CORPORATION, Ibaraki-shi, Osaka 567-8680 (JP)
(72) Inventor: Hayata, Maiko, Ibaraki-shi Osaka 567-8680 (JP); Okumura, Kazuhito, Ibaraki-shi Osaka 567-8680 (JP); Yamamoto, Mitsushi, Ibaraki-shi Osaka 567-8680 (JP)
(74) Representative: Grünecker, Kinkeldey, Stockmair & Schwanhäusser Anwaltssozietät

(57) **Abstract**

A protective sheet (10) is provided which exhibits excellent properties as a protective sheet and a satisfactory handleability. The protective sheet (10) is formed of a substrate (1) which is a plastic film and a pressure-sensitive adhesive layer (2) which is provided on one side of the substrate, and satisfies all of the following properties: (A) the total flexural rigidity D_{Trt} at 25°C in a first direction and a second direction is from 3.0×10⁻⁶ to 20×10⁻⁶ Pa·m³; (B) the total flexural rigidity D_{Tht} at 80°C is from 0.10×10⁻⁶ to 1.2x10⁻⁶Pa·m³; (C) the flexural rigidity ratio D_{R}, defined as D_{Trt}/D_{Tht} is from 3.0 to 80; and (D) the tensions T1ᵣₜ and T2ᵣₜ at 25°C when stretched 10% in the first direction and the second direction respectively are at least 5.0 N/10 mm.
The plastic film is a polypropylene film and the pressure-sensitive adhesive layer is formed of an acrylic pressure-sensitive adhesive.

## Description

### CROSS-REFERENCE

This application claims priority to Japanese Patent Application No. 2010-013026 filed on January 25, 2010, the entire contents of which are incorporated herein by reference.

### BACKGROUND OF THE INVENTION

### 1. Field of the Invention

The present invention relates to a protective sheet, and relates more particularly to a protective masking sheet that protects non-plating areas from the plating solution during metal plating.

### 2. Description of the Related Art

One process that is used for partially plating connection terminals and the like on circuit boards (e.g., printed circuit boards, flexible printed circuit boards (FPC)) involves attaching a pressure-sensitive adhesive (PSA) sheet to areas which are not to be plated (non-plating areas), and carrying out plating treatment in a state where such areas are protected from the plating solution. PSA sheets (protective sheets for masking during plating) used in this manner are typically constructed of a substrate which is a plastic film impermeable to the plating solution, and a PSA layer which is provided on one side of the substrate. An example of the technical literature relating to such protective sheets is Japanese Patent Application Publication No. 2004-115591. Other technical literature relating to PSA sheets includes Japanese Patent Application Publication Nos. 2004-137436 (about a double-sided adhesive tape) and 2005-203749 (about a tape for wafer processing).

To prevent infiltration of the plating solution from the outer edges of the sheet to the masked areas, the protective sheet for masking during plating is required to have the quality of closely adhering, without lifting or peeling, to the surface of the circuit board to which the sheet has been attached. Because a complex topography owing to the already formed circuits is present on the surface of the circuit board, it is essential that the protective sheet closely adhere while conforming to this topography (surface conformability).

### SUMMARY OF THE INVENTION

One representative example of a technique that may be used to increase such conformability involves giving the substrate (typically a plastic film) of the protective sheet a smaller thickness. However, in general, when the substrate is given a small thickness, the handleability of the protective sheet during production and use tends to decline. For example, because the protective sheet has a low stiffness or tends to stretch when subjected to tensile stress, the ease of operation when the protective sheet is placed at a given position on the adherend or when it is peeled from the adherend following completion of the protective role tends to decline. Such a decrease in handleability may become a major factor in lowering the manufacturability of the protective sheet itself or the manufacturability of products on which such a protective sheet is used (e.g., circuit boards manufactured by way of an operation in which such a protective sheet is used for masking during plating).

It is therefore an object of the invention to provide a protective sheet which achieves to a high level both the protecting performance (e.g., surface conformability) and handleability of a protective sheet (especially a protective sheet for masking during plating).

Accordingly, the invention provides a protective sheet having a substrate which is a plastic film (e.g., a polypropylene film) and a PSA layer which is provided on one side of the substrate. The protective sheet is characterized by satisfying all of properties (A) to (D) below. Here, the flexural rigidity D (units: Pa.m³) of the protective sheet in a given direction is defined as the value determined by the formula D = Eh³/12(1-V²), where E is the tensile modulus of the protective sheet in the given direction, h is the thickness of the substrate, and V is Poisson's ratio for the substrate:
(A) when at 25°C a flexural rigidity in a first direction is defined as D1ᵣₜ and a flexural rigidity in a second direction perpendicular to the first direction is defined as D2ᵣₜ, a total flexural rigidity D_{Trt} at room temperature, represented by D1ᵣₜ + D2ᵣₜ, is from 3.0X10⁻⁶ to 20x10⁻⁶ Pa.m³;
(B) when at 80°C a flexural rigidity in the first direction is defined as D1ₕₜ and a flexural rigidity in the second direction is defined as D2ₕₜ, a total flexural rigidity D_{Tht} at high temperature, represented by D1ₕₜ+ D2ₕₜ, is from 0.10x10⁻⁶ to 1.2x10⁻⁶Pa·m³;
(C) the flexural rigidity ratio D_{R}, defined as D_{Trt}/D_{Tht}, is from 3.0 to 80; and
(D) the tension T1ᵣₜ when stretched 10% in the first direction at 25°C and the tension T2ᵣₜ when stretched 10% in the second direction at 25°C are each at least 5.0 N/10 mm.

Because this protective sheet (e.g., a protective sheet for masking during plating) possesses a total flexural rigidity at room temperature D_{Trt} of at least 3.0x10⁻⁶ Pa.m³, it has a suitably strong stiffness in a normal working environment (typically about 15°C to 35°C). Therefore, when it is placed at given positions on an adherend (e.g., the non-plating areas of a circuit board), this protective sheet is easy to work with because it does not readily twist or wrinkle. Also, when the protective sheet is peeled from the adherend, it is easy to work with because the elastic forces of the protective sheet itself (the forces that work to restore the original shape against bending deformation) can be utilized as part of the peeling force. In addition, because the total flexural rigidity at high temperature D_{Tht} is not more than 1.2x10⁻⁶ Pa.m³, by pressure-bonding the protective sheet to the adherend under high-temperature conditions (e.g., about 60°C to 90°C), the protective sheet can be made to deform well so as to follow the surface shape of the adherend and thus induced to closely adhere thereto. Furthermore, because the flexural rigidity ratio D_{R} (defined as D_{Trt}/D_{Tht}) is at least 3.0, the film has a combination of stiffness at room temperature and easy deformability at high temperature, thus enabling it to achieve a high level of both the above-indicated ease of use, or in other words ease of operation and surface conformability (close adherence). Finally, because the protective sheet has tensions T1ᵣₜ and T2ᵣₜ when stretched 10% at 25°C that are both at least 5.0 N/10 mm, it has a good dimensional stability during handling. For example, when the release liner is peeled from the PSA layer surface (PSA side) of the protective sheet and the exposed PSA side is attached to an adherend, the protective sheet having the above tensions when stretched 10% does not readily undergo excessive stretching, thus enabling a good ease of operation to be maintained.

Generally, it is preferable to use the machine direction (sometimes abbreviated below as "MD"; this refers to the direction of flow, typically the lengthwise direction of the substrate) as the first direction mentioned above. In this case, the second direction mentioned above becomes a direction perpendicular to the MD; i.e., the transverse direction (sometimes abbreviated below as "TD"; this typically refers to the width direction of the substrate). In this specification, the tensile modulus of the protective sheet shall refer to the value calculated per cross-sectional area of the substrate or the protective sheet.

In a preferred aspect of the protective sheet disclosed herein, the protective sheet also satisfies the following property: (E) when at 25°C a tensile modulus in the first direction is defined as E1ᵣₜ and a tensile modulus in the second direction is defined as E2ᵣₜ, a total tensile modulus E_{Trt} at room temperature, represented by E1ᵣₜ + E2ᵣₜ, is from 800 MPa to 8,000 MPa. Such a protective sheet can easily be endowed with the desirable total flexural rigidity at room temperature D_{Trt} disclosed herein.

In another preferred aspect of the protective sheet disclosed herein, the protective sheet also satisfies the following property: (F) when at 25°C a tear strength in the first direction is defined as S1ᵣₜ and a tear strength in the second direction is defined as S2ᵣₜ, a total tear strength S_{Trt} at room temperature, represented by S1ᵣₜ + S2ᵣₜ, is from 3.0 N to 15 N. Such a protective sheet is capable of having an even better handleability. For example, because the protective sheet does not readily tear when peeled from the adherend, a better ease of operation can be achieved in peeling.

In another preferred aspect of the protective sheet disclosed herein, the protective sheet also satisfies the following property: (G) when at 25°C a breaking strength in the first direction is defined as H1ᵣₜ and a breaking strength in the second direction is defined as H2ᵣₜ, a total breaking strength H_{Trt} at room temperature, represented by H1ᵣₜ + H2ᵣₜ, is from 20 to 140 N/10 mm. Such a protective sheet is capable of having an even better handleability. For example, because the protective sheet does not readily break apart when peeled from the adherend, a better ease of operation can be achieved in peeling.

Any one of the protective sheets disclosed herein is suitable as a protective sheet to be attached to a non-plating area during metal plating so as to protect the non-plating area from a plating solution. Such protective sheets for masking during plating may be advantageously used in, for example, the step of partially plating the connection terminal areas of a circuit board.

### BRIEF DESCRIPTION OF THE DRAWINGS

FIG. 1 is a schematic cross-sectional diagram of a configuration example of the protective sheet according to the present invention;
FIG. 2 is a schematic cross-sectional diagram of another configuration example of the protective sheet of the present invention;
FIG. 3 is a front view illustrating a method for evaluating adherence; and
FIG. 4 is a cross-sectional view taken along line IV-IV in FIG. 3.

### DETAILED DESCRIPTION OF THE INVENTION

Preferred embodiments of the present invention are described below. Technical matters necessary to practice the invention, other than those specifically referred to in the present description, may be understood as design matters for a person skilled in the art that are based on the related art in the pertinent field. The present invention may be practiced based on the contents disclosed herein and common general technical knowledge in the pertinent field.

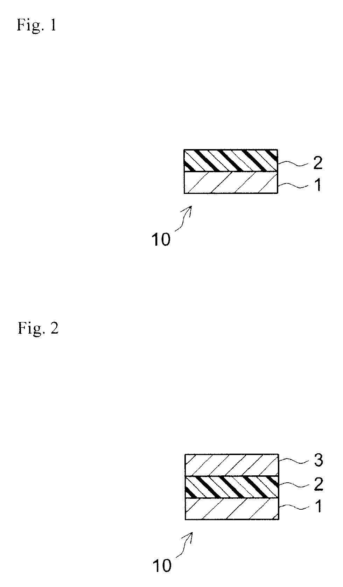

FIG. 1 schematically shows a typical construction of the protective sheet provided by the present invention. This protective sheet 10, which has a sheet-shaped substrate 1 made of plastic and a PSA layer 2 provided on a first side (one side) thereof, is used by attaching the PSA layer 2 to given places (areas to be protected, e.g., in the case of protective sheets for masking during plating, non-plating areas) on an adherend. The protective sheet 10 prior to use (that is, prior to attachment to the adherend) may typically be in a form where, as shown in FIG. 2, the surface (attaching side) of the PSA layer 2 is protected by a release liner 3 having a release face (release side) on at least the PSA layer 2 side thereof. Alternatively, the protective sheet 10 may have a construction wherein the second side of the substrate 1 (the back side from the side where the PSA layer 2 is provided) is a release side and, by coiling the protective sheet 10 into a roll, the second side comes into direct contact with the PSA layer 2 in such a way as to protect the surface thereof.

In the art disclosed herein, the total flexural rigidity at room temperature D_{Trt} of the protective sheet is defined as the sum of the flexural rigidity D1ᵣₜ of the protective sheet in a first direction (typically the MD of the substrate in the protective sheet) at 25°C and the flexural rigidity D2ᵣₜ of the protective sheet in a second direction perpendicular to the first direction (typically the TD of the substrate) at 25°C. D1ᵣₜ is a value determined by the formula D1ᵣₜ = E1ᵣₜh³/12(1-V²) where E1ᵣₜ is the tensile modulus of the protective sheet in the first direction at 25°C, h is the thickness of the substrate, and V is Poisson's ratio for the substrate. D2ᵣₜ is a value determined by the formula D2ᵣₜ = E2ᵣₜh³/12(1-V²), where E2ᵣₜ is the tensile modulus of the protective sheet in the second direction at 25°C, h is the thickness of the substrate, and V is Poisson's ratio for the substrate.

E1ᵣₜ in the above formula can be calculated from the subsequently described linear regression of the stress-strain curve obtained by cutting out a test piece along a first direction (e.g., the MD) of the substrate and, in general accordance with JIS K7161, stretching the test piece in the first direction at a measurement temperature of 25°C and a pulling rate of 300 mm/min. Aside from cutting out a test piece along a second direction (e.g., the TD) of the substrate and stretching the test piece in the second direction, E2ᵣₜ in the above formula can be obtained in the same way as E1ᵣₜ. More specifically, the E1ᵣₜ and E2ᵣₜ values obtained in accordance with the tensile modulus measurement method described in the subsequent examples can be employed. Poisson's ratio V is a value (non-dimensional number) determined by the substrate material. When this material is a thermoplastic resin, a value of 0.35 can generally be used as V.

The D_{Trt} value of the protective sheet disclosed herein is at least 3.0x 10⁻⁶ Pa.m³ (typically, from 3.0x 10⁻⁶ to 20x 10⁻⁶ Pa.m³). If D_{Trt} is too much smaller than 3.0x10⁻⁶ Pa.m³, in an ordinary working environment (typically from about 15°C to about 35°C), the protective sheet will have too little stiffness and be difficult to handle. As a result, when the protective sheet is placed at a given position on the adherend or when the protective sheet is peeled from the adherend, the ease of carrying out the operation will tend to decline. For example, when the protective sheet is peeled from an adherend surface having raised and recessed features (e.g., a circuit board on which wiring has been printed), the fluctuations in the peel strength due to the raised and recessed features are large, as a result of which the protective sheet may have a tendency to tear or break up in the course of peeling. In such situations, the peeling operation may have to be carried out great care, thus lowering the ease of carrying out the peeling operation. In a preferred aspect, D_{Trt} is at least 3.5x10⁻⁶ Pa.m³ (e.g., at least 4.0x10⁻⁶ Pa.m3). In the aspect of the protective sheet disclosed herein, the D_{Trt} value of the protective sheet is 20x10⁻⁶ Pa·m³ or less (typically, 10x10⁻⁶ Pa·m³ or less).

The total flexural rigidity of the protective sheet at high temperature D_{Tht} is defined as the sum of the flexural rigidity of the protective sheet at 80°C in the first direction (typically the MD) D1ₕₜ and the flexural rigidity in the second direction (typically the TD) D2ₕₜ. D1ₙₜ is a value determined by the formula D1ₕₜ = E1ₕₜh³ / 12(1-V²), where E1ₕₜ is the tensile modulus of the protective sheet in the first direction at 80°C, h is the thickness of the substrate, and V is Poisson's ratio for the substrate (when this substrate is a thermoplastic plastic film, a value of 0.35 may be used as V; the same applies below). D2ₕₜ is a value determined by the formula D2ₕₜ = E2ₕₜh³/12(1-V²), where E2ₕₜ is the tensile modulus of the protective sheet in the second direction at 80°C, h is the thickness of the substrate, and V is Poisson's ratio for the substrate. Aside from setting the measurement temperature to 80°C, E1ₕₜ and E2ₕₜ in the above formula may be determined in the same way as E1ᵣₜ and E2ᵣₜ.

The D_{Tht} value of the protective sheet disclosed herein is 1.2x10⁻⁶ Pa·m³ or less (typically, from 0.10×10⁻⁶to 1.2 ×10⁻⁶ Pa·m³). If D_{Tht} is too much larger than 1.2x10⁻⁶ Pa·m³, even when the protective sheet is pressure-bonded to an adherend under high-temperature conditions (e.g., about 60°C to 90°C), the protective sheet will tend to not fully follow the surface topology of the adherend. As a result, the adherence (surface conformability) of the protective sheet tends to be inadequate. In an aspect of the protective sheet disclosed herein, the D_{Tht} of the protective sheet is at least 0.10×10⁻⁶ Pa·m³ (typically, at least 0.25x 10⁻⁶ Pa·m³, and generally at least 0.50×10⁻⁶ Pa·m³).

In the art disclosed herein, the flexural rigidity ratio D_{R} is a value defined as the ratio of the total flexural rigidity at room temperature D_{Trt} to the total flexural rigidity at high temperature Drab or D_{Trt}/D_{Tht}. The D_{R} of the protective sheet disclosed herein is at least 3.0 (typically from 3.0 to 80). A protective sheet having such a D_{R}, by being endowed with both stiffness at room temperature and ready deformability at high temperature, is both very easy to work with and has a high level of surface conformability (adherence). When the D_{R} is too much lower than 3.0, the protective sheet will tend to have a lower handleability or inadequate adherence. In one aspect of the protective sheet disclosed herein, the D_{R} of the protective sheet is at least 3.5 (e.g., at least 4.0). With such a protective sheet, the ease of use and the adherence can both be achieved to even higher levels. In the aspect of the protective sheet disclosed herein, the protective sheet has a D_{R} of 80 or less (typically 40 or less, and generally 20 or less, such as 10 or less).

In a typical aspect of the protective sheet disclosed herein, the tension T1ᵣₜ of the protective sheet when stretched 10% in the first direction (typically the MD) at 25°C and the tension T2ᵣₜ of the protective sheet when stretched 10% in the second direction (typically the TD) at 25°C are both at least 5.0 N/10 mm. Here, the 10% stretching tensions T1ᵣₜ and T2ᵣₜ are the tensile tensions as measured according to JIS K7127 and obtained when test pieces with a width of 10 mm that have been cut out along the first direction and the second direction are stretched 10% at a pulling rate of 300 mm/min and a measurement temperature of 25°C. Use can be made of, for example, the T1ᵣₜ and T2ᵣₜ values obtained according to the 10% stretching tension measurement method described in the subsequent examples.

If the protective sheet undergoes too much stretching deformation (such deformation typically being primarily elastic deformation) due to the peeling forces when the release liner is peeled from the PSA side of the protective sheet, the stretch-deformed protective sheet will shrink after being attached to the adherend, as a result of which the attachment region precision and adherence of the protective sheet may tend to decline. By waiting for the stretching deformation to vanish after the release liner has been peeled off, then attaching the protective sheet to the adherend, shrinkage following attachment may be suppressed, but this markedly lowers the ease of use. Also, in protective sheets having too small a 10% stretching tension, at the time of manufacture, in a state where the protective sheet has been excessively stretched, the release liner tends to bond to the PSA side. Because strain is present in such a protective sheet (protective sheet with release liner), when the release liner is peeled from the PSA side after the protective sheet has been cut, together with the release liner, to a given size (a size adjusted to the shape of the region to be protected, such as a non-plating region), the protective sheet which was in the above stretched state shrinks, as a result of which the protective sheet may become unable to cover the desired region. With a protective sheet in which T1ᵣₜ and T2ᵣₜ are both at least 5.0 N/10 mm (preferably at least 6.0 N/10 mm, and more preferably at least 7.0 N/10 mm), such a situation can be suitably prevented from occurring. There is no particular upper limit for T1ᵣₜ and T2ᵣₜ. For example, a protective sheet in which T1ᵣₜ and T2ᵣₜ are both 50 N/10 mm or less (typically 30 N/10 mm or less, and generally 15 N/10 mm or less) is possible.

In a preferred aspect of the protective sheet disclosed herein, the total tension T_{Trt} of the protective sheet when stretched 10% at room temperature, defined as the sum of T1ᵣₜ and T2ᵣₜ (i.e., T1ᵣₜ+T2ᵣₜ), is at least 12.0 N/10 mm (typically from 12.0 to 100 N/10 mm). T_{Trt} may be 14.0 N/10 mm or more, and may even be 15.0 N/10 mm or more. With such a protective sheet, a better dimensional stability can be achieved. There is no particular upper limit for T_{Trt}. For example, a protective sheet in which T_{Trt} is 100 N/10 mm or less (typically 60 N/10 mm or less, and generally 30 N/10 mm or less) is possible.

In a preferred aspect of the protective sheet disclosed herein, the total tensile modulus of the protective sheet at room temperature E_{Trt}, defined as the sum of E1ᵣₜ and E2ᵣₜ (i.e., E1ᵣₜ+E2ᵣₜ), is at least 800 MPa, and more preferably at least 1,000 MPa (e.g., 1,100 MPa or more). Such a protective sheet is desirable because it tends to have a suitable D_{Trt}, and therefore tends to have a good handleability in a room temperature environment. There is no particular upper limit for E_{Trt}. In one aspect of the protective sheet disclosed herein, the E_{Trt} of the protective sheet is 8,000 MPa or less (typically 4,000 MPa or less, such as 2,000 MPa or less). Such a protective sheet is desirable because it tends to have a suitable D_{Tht}, and therefore tends to have an excellent adherence.

In an aspect of the protective sheet disclosed herein, letting the tear strength of the protective sheet at 25°C in the first direction (typically the MD) be S1ᵣₜ and the tear strength in the second direction (typically the TD) be S2ᵣₜ, the total tear strength at room temperature S_{Trt}, defined as the sum of S1ᵣₜ and S2ᵣₜ (i.e., S1ᵣₜ+S2ᵣₜ), is at least 3.0 N. This protective sheet, by having the desired resistance to tearing, is capable of having a better handleability. For example, when the protective sheet is peeled from the adherend, tearing of the sheet does not readily occur during peeling, thus enabling the peeling operation to be more easily carried out. This is because, when a protective sheet which has completed its protective purpose is peeled from the adherend (e.g., a FPC), if the protective sheet tears during peeling, a portion of the sheet will remain on the adherend. The result will be a decline in the efficiency of the peeling operation owing to, for example, the trouble of dealing with the protective sheet remaining on the adherend. The S_{Trt} is preferably at least 5.0 N, and more preferably at least 7.0 N (e.g., at least 9.0 N). There is no particular upper limit for S_{Trt}. In an aspect of the protective sheet disclosed herein, S_{Trt} is 20 N or less (e.g., 15 N or less).

Here, S1ᵣₜ and S2ᵣₜ are determined, in general accordance with JIS K6772, as the maximum load when a test piece is torn in a first direction and a second direction, respectively, at a measurement temperature of 25°C. More specifically, the values of S1ᵣₜ and S2ᵣₜ obtained in accordance with the tear strength measurement method described in the subsequent examples can be used. The total tear strength S_{Trt} is determined by adding together these values S1ᵣₜ and S2ᵣₜ.

In one aspect of the protective sheet disclosed herein, letting the breaking strength of the protective sheet at 25°C in the first direction (typically the MD) be H1ᵣₜ and the breaking strength in the second direction (typically the TD) be H2ᵣₜ, the total breaking strength at room temperature H_{Trt}, defined as the sum of H1ᵣₜ and H2ᵣₜ (i.e., H1ᵣₜ+H2ᵣₜ), is 20 N/10 mm or more. Because such a protective sheet has the desired resistance to breaking apart, a sheet having even better handleability can be achieved. For example, when the protective sheet is peeled from the adherend, because the sheet is unlikely to break apart during peeling, the peeling operation can be more easily carried out. The H_{Trt} value is preferably at least 25 N/10 mm, and more preferably at least 30 N/10 mm. There is no particular upper limit for H_{Trt}. In one aspect of the protective sheet disclosed herein, H_{Trt} is 140 N/10 mm or less, and typically 100 N/10 mm or less (e.g., 50 N/10 mm or less).

Here, H1ᵣₜ and H2ᵣₜ are determined, in general accordance with JIS K7161, as the maximum load when a test piece is pulled in the first direction and the second direction, respectively, at a measurement temperature of 25°C until the test piece breaks into pieces. More specifically, for example, the values of H1ᵣₜ and H2ᵣₜ obtained in accordance with the breaking strength measurement method described in the subsequent examples can be used. The total breaking strength H_{Trt} is determined by adding together these values H1ᵣₜ and H2ᵣₜ.

Various types of plastic films (typically, a film composed primarily of a thermoplastic resin) may be employed as the substrate of the protective sheet disclosed herein. In cases where the protective sheet according to the present invention is a protective sheet for masking during plating, a film composed of a resin material having resistance to the plating solution likely to be used is preferred. From the standpoint of, for example, reducing the burden on the environment, a plastic film having a substantially halogen-free composition is preferred. Preferred examples of the resin component (i.e., polymer component) used in the substrate include polyolefin resins, polyethylene terephthalate (PET) and other polyester resins, and polyamide resins, polycarbonate resins, polyurethane resins, ethylene-vinyl acetate resins (EVA) and acrylic resins. The substrate may be composed of a resin material containing one such type of resin used alone, or may be composed or a resin material blended from two or more resins. The substrate may have a single-layer structure or a multilayer structure of two or more layers (e.g., a three-layer structure). In a plastic film having a multilayer structure, the resin material making up each of the respective layers may be, as described above, a resin material containing a single type of resin by itself, or may be a resin material blended from two or more resins.

In a preferred aspect, the substrate is a single-layer or multilayer polyolefin plastic film. Here, "polyolefin plastic film" refers to a film in which the resin components making up the film are composed primarily of a polyolefin resin (i.e., a resin which is composed primarily of polyolefin). One typical example of the polyolefin plastic film is a film in which the resin components are substantially composed of a polyolefin resin. The polyolefin making up the polyolefin resin is exemplified by homopolymers of α-olefins, copolymers of α-olefins, and copolymers of one, two or more α-olefin with another vinyl monomer. Illustrative examples include polyethylene (PE), polypropylene (PP), ethylene-propylene copolymer, ethylene-propylene-butene copolymer, ethylene-propylene rubber (EPR) and ethylene-ethyl acrylate copolymer. The polyolefin resin may be a resin which includes a single such polyolefin alone, or may be a resin which includes a combination of two or more such polyolefins.

A preferred example of the substrate in the art disclosed herein is a film composed primarily of polypropylene resin (PP film). Here, "PP film" refers to a plastic film in which at least 50 mass% of the overall film is a PP resin. For example, preferred use may be made of a PP film wherein at least 60 mass% (typically at least 70 mass%) of the overall substrate is a PP resin. Alternatively, a PP film in which at least 50 mass% (more preferably, at least 60 mass%) of the polymer included in the substrate is polypropylene is preferred.

The polypropylene may be any of various polymers (propylene polymers) in which propylene serves as the primary monomer (primary constituent monomer; i.e., a component accounting for at least 50 mass% of the overall monomer). As used herein, the concept of a "propylene polymer" encompasses polypropylenes such as the following: propylene homopolymers (i.e., homopolypropylene), such as isotactic polypropylene, syndiotactic polypropylene and atactic polypropylene; random copolymers (random polypropylenes) of propylene with another α-olefin (typically, one, two or more selected from among ethylene and α-olefins with 4 to 10 carbons), such as random polypropylenes obtained by random copolymerizing 96 to 99.9 mol% of propylene with 0.1 to 4 mol% of another α-olefin (preferably ethylene and/or butene); and block copolymers (block polypropylenes) obtained by block copolymerizing propylene with another α-olefin (typically one, two or more selected from among ethylene and α-olefins with 4 to 10 carbons). Such a block polypropylene may additionally include, as a by-product, a rubber component composed of propylene and at least one other α-olefin. For example, the block polypropylene may be one which includes a polymer obtained by the block copolymerization of 90 to 99.9 mol% of propylene with 0.1 to 10 mol% of another α-olefin (preferably ethylene and/or butene), and additionally includes, as a by-product, a rubber component composed of propylene and at least one other α-olefin.

The polypropylene resin may be a resin wherein the primary component of the resin components is a propylene polymer such as any of those mentioned above, and in which another polymer has been blended as a secondary component. The other polymer may be one, two or more polyolefin in which the primary monomer (primary constituent monomer, i.e., the component accounting for at least 50 mass% of the overall monomer) is an α-olefin other than propylene, such as an α-olefin with 2 carbons or 4 to 10 carbons. The polypropylene resin may have a composition which includes at least polyethylene as the secondary component. The polyethylene content may be set to, for example, from 3 to 50 parts by mass (typically, from 5 to 30 parts by mass) per 100 parts by mass of polypropylene. The resin component may be a polypropylene resin which is substantially composed of polypropylene and polyethylene. Alternatively, it may be a polypropylene resin which includes as secondary components at least polyethylene and EPR (e.g., a polypropylene resin in which the resin component is substantially composed of polypropylene, polyethylene and EPR).

The above polyethylene may be an ethylene homopolymer or a copolymer of ethylene as the primary monomer with another α-olefin (e.g., an α-olefin of 3 to 10 carbons). Preferred examples of the α-olefin include propylene, 1-butene, 1-hexene, 4-methyl-1-pentene and 1-octene. Use may be made of any of the following: low-density polyethylene (LDPE), linear low-density polyethylene (LLDPE) and high-density polyethylene (HDPE). For example, the use of LDPE and/or LLDPE is preferred.

Ingredients suitable for the intended use of the protective sheet may be optionally included in the substrate. For example, additives such as light stabilizers (e.g., radical scavengers, ultraviolet absorbers), antioxidants, antistatic agents, colorants (e.g., dyes, pigments), fillers, slip agents and anti-blocking agents may be suitably included. Examples of light stabilizers include those containing any of the following as the active ingredient: benzotriazoles, hindered amines, and benzoates. Examples of antioxidants include those containing any of the following as the active ingredient: alkylphenols, alkylene bisphenols, thiopropylene acid esters, organic phosphites, amines, hydroquinones and hydroxylamines. Each of these types of additives may be used singly or as a combination of two or more thereof. The loadings of these additives may, depending on the intended use of the protective sheet (e.g., for masking in a plating operation), be made about the same as conventional loadings for plastic films used as the substrate in such applications.

Such a substrate (plastic film) may be manufactured by suitably employing an ordinary known film-forming process (e.g., extrusion, film blowing). The surface of the substrate on the side where the PSA layer is provided (PSA layer side surface) may be subjected to treatment for enhancing adhesion with the PSA layer, such as corona discharge treatment, acid treatment, ultraviolet irradiation treatment, plasma treatment, or primer coating. The face of the substrate on the side opposite from the PSA layer side surface (referred to herein as the "back side") may be optionally subjected to surface treatment such as antistatic treatment or release treatment.

The thickness of the substrate may be suitably selected according to, for example, the intended use of the protective sheet. From the standpoint of being able to easily obtain a protective sheet which satisfies above properties (A) to (D), use may be made of a substrate having a thickness of from about 10 µm to about 80 µm. The use of a substrate having a thickness of from about 10 µm to about 70 µm (e.g., from 10 µm to 50 µm) is generally appropriate. The art disclosed herein may also be suitably applied to protective sheets (e.g., protective sheets for masking during plating) having a substrate thickness of less than 40 µm (typically, at least 10 µm but less than 40 µm, such as from about 25 µm to about 38 µm).

No particular limitation is imposed on the type of PSA making up the PSA layer of the protective sheet disclosed herein. For example, the PSA layer may be constructed so as to include one or more type of PSA (preferably a repeelable PSA) selected from various known types of PSA, such as acrylic PSAs (PSAs in which an acrylic polymer serves as the base polymer—i.e., the main component among the polymer components; the same applies below), rubber PSAs (e.g., PSAs based on natural rubbers, synthetic rubbers, or mixtures thereof), silicone PSAs, polyester PSAs, urethane PSAs, polyether PSAs, polyamide PSAs and fluoropolymer PSAs.

In a preferred aspect, the PSA making up the PSA layer is an acrylic PSA in which an acrylic polymer serves as the base polymer (the primary component of the polymer included in the PSA). The acrylic polymer is typically a (co)polymer in which an alkyl(meth)acrylate serves as the primary monomer. For example, a PSA layer constructed so as to include an acrylic PSA composed primarily of an acrylic polymer in which the primary monomer is a (meth)acrylic acid ester of an alkyl alcohol with 2 to 14 carbons (more preferably, with 4 to 10 carbons) (e.g., an acrylic polymer obtained by polymerizing butyl acrylate or 2-ethylhexyl acrylate, or by copolymerizing both of these in a combined amount of at least 50 mass%) is preferred.

Examples of methods that may be used to provide such a PSA layer on the substrate include a method in which a PSA composition having fluidity is directly applied (typically, coated) to the substrate and cured (direct method); a method in which the PSA layer is formed by applying the above PSA composition to a surface having releasability (release surface) and curing, then laminating this PSA layer onto the substrate and transferring the PSA layer to the substrate (transfer method); and a method in which the substrate and the PSA composition are co-extruded (co-extrusion method). Preferred use can be made of, for example, the direct method or the transfer method. Curing treatment may involve one, two or more treatment selected from among, for example, drying (heating), cooling, crosslinking, supplementary copolymerization reactions, and aging. For example, what is referred to herein as the curing treatment encompasses also treatments which consist solely of simply drying a solvent-containing PSA composition (e.g., heating treatment) and treatments which consist solely of simply cooling a PSA composition in a hot molten state (solidification). When curing treatment includes two or more treatments (e.g., drying and crosslinking), these treatments may be carried out at the same time or may be carried out in a plurality of stages.

No particular limitation is imposed on the form of the PSA composition. That is, the PSA composition may be in any of various forms, such as in the form of a solution (i.e., a form obtained by dissolving, in an organic solvent, a polymer obtained by aqueous emulsion polymerization), an emulsion, an aqueous solution, an actinic light (e.g., UV light)-curable form or a hot-melt form. The PSA composition may include one, two or more type of common additive, such as crosslinking agents, tackifiers, viscosity modifiers, leveling agents, plasticizers, antistatic agents, colorants (e.g., dyes, pigments), fillers, stabilizers, preservatives and antioxidants. In the case of acrylic PSA compositions, preferred examples of the crosslinking agent used include isocyanate crosslinking agents, carbodiimide crosslinking agents, hydrazine crosslinking agents, epoxy crosslinking agents, oxazoline crosslinking agents, aziridine crosslinking agents, metal chelate crosslinking agents and silane coupling agents. Of these, the use of isocyanate crosslinking agents is preferred. The amount in which such additives are included may be set, depending on the intended use of the protective sheet (e.g., for masking during plating), to about the same level as the conventional amount included in PSA compositions used to form a PSA layer in this application (i.e., used in protective sheet production).

The thickness of the PSA layer may be, for example, from about 1 µm to about 100 µm. Generally, it is preferable to set the thickness of the PSA layer to from about 5 µm to about 40 µm (e.g., from about 10 µm to about 20 µm). For example, the above range may be advantageously used as the thickness of the PSA layer in a protective sheet for masking during plating.

A plastic film having a total tension t_{Trt} when stretched 10% at room temperature, defined as the sum of the tension t1ᵣₜ when the substrate is stretched 10% in the first direction (typically the MD) at 25°C and the tension t2ᵣₜ when the substrate is stretched 10% in the second direction (typically the TD) at 25°C (i.e., t1ᵣₜ+t2ᵣₜ), of at least 10.0 N/10 mm may be suitably employed as the substrate of the protective sheet disclosed herein. Here, the 10% stretching tension of the substrate can be measured in the same way as the 10% stretching tension of the protective sheet. More specifically, the values t1ᵣₜ and t2ᵣₜ obtained according to the method of measuring the 10% stretching tension described in the subsequent examples may be employed. In a preferred aspect, the t_{Trt} value of the substrate is at least 14.0 N/10 mm (and more preferably at least 15.0 N/10 mm). A protective sheet having such a substrate is preferred because it easily satisfies properties (A) to (D) disclosed herein (and preferably also one, two or more of properties (E) to (G)). There is no upper limit for t_{Trt}. For example, preferred use may be made of a substrate for which t_{Trt} is 80 N/10 mm or less (typically, 50 N/10 mm or less, and generally 30 N/10 mm or less).

The matters disclosed in this specification include a protective sheet manufacturing process which encompasses measuring the tension t1ᵣₜ of a plastic film when stretched 10% in the MD and the tension t2ᵣₜ, of the film when stretched 10% in the TD; determining the total tension t_{Trt} of the plastic film when stretched 10% at room temperature (= t1ᵣₜ+t2ᵣₜ); rating the plastic film as acceptable ("good") when t_{Trt} is a given value or more, and unacceptable ("NG") when it is below the given value; and using the plastic film which has been rated as good as the substrate, and providing a PSA layer on one side of the substrate so as to fabricate a protective sheet (e.g., a protective sheet for masking in a plating operation). Here, the given value may be set to, for example, 14.0 N/10 mm, and preferably 15.0 N/10 mm. This given value may be most preferably applied when the plastic film is a polypropylene film. The above protective sheet manufacturing method can be advantageously used as the method for manufacturing any of the protective sheets disclosed herein. Measurement of the above t1ᵣₜ and t2ᵣₜ, values, computation of the t_{Trt} value, and the rating of the plastic film as acceptable or unacceptable do not need to be carried out each time the protective sheet is manufactured. For example, when production of the protective sheet is repeatedly carried out using the same material (e.g., the same grade of commercial product) as a plastic film that has already been rated as acceptable, the plastic film may be assumed to have approximately the same t_{Trt} as at the time of the above acceptable rating, enabling operations up to the acceptability rating to be omitted. Of course, the operations up to the acceptability rating may be carried each time the plastic film is produced, or the value of t_{Trt} may be verified by carrying out randomly timed sampling inspections.

The protective sheet disclosed herein may be in a form wherein a release liner is disposed on the PSA layer surface (the PSA side, i.e., the surface on the side of the protective sheet which will be attached to the object to be protected). A protective sheet in such a form (a protective sheet with release liner) may be advantageously employed as a protective sheet for masking during a plating operation. This is because, generally, when the protective sheet for masking during plating is punched in a shape that corresponds to the masking region (that is, the region to be protected) and is attached to an adherend, a protective sheet in a form having a release liner on a PSA layer (that is, a protective sheet with release liner) enables the punching operation to be efficiently carried out. After the protective sheet with release liner has been punched, it is used by peeling the release liner from the protective sheet so as to expose the PSA side, then pressure-bonding the PSA side to the adherend.

Various types of paper (which may be paper to the surface of which a resin has been laminated), plastic films and the like may be used without particular limitation as the release liner. In cases where a plastic film is used as the release liner, preferred examples of the resin component making up the plastic film include polyolefin resins, polyester resins (e.g., PET), polyamide resins, polycarbonate resins and polyurethane resins. The plastic film may be one composed of a resin material which includes one such type of resin alone, or may be a plastic film composed of a resin material blended from two or more resins (e.g., polyethylene and polypropylene). The plastic film may have a single-layer structure or a multilayer structure of two or more layers. As with the plastic film serving as the substrate, such plastic films for the release liner may be produced by suitably employing a common film-forming method.

The thickness of the release liner is not subject to any particular limitation and may be, for example, from about 5 µm to about 500 µm (and preferably from about 10 µm to about 200 µm, such as from about 30 µm to about 200 µm). The release side of the release liner (the side situated in contact with the PSA side) may optionally be subjected to release treatment with a known release agent (e.g., a common silicone, long-chain alkyl or fluorocarbon release agent). The back side (opposite from the release side) of the release liner may or may not be release-treated, and may be subjected to a surface treatment other than release treatment.

In a protective sheet having a form wherein a release liner is disposed on the PSA side (protective sheet with release liner), if the peel force (liner peel force) when the release liner is peeled from the PSA side is too high, the ease of carrying out the protective sheet attaching operation may diminish due to, for example, a tendency for the protective sheet to stretch during peeling of the release liner from the PSA side. From this standpoint, a protective sheet in which the liner peel strength at 25°C, as measured by the subsequently described method, is about 0.5 N/50 mm or less (preferably about 0.3 N/50 mm or less) is preferred. Because the ease of carrying out the operation may also decrease if the liner peel strength is too low, it is generally preferable for the liner peel strength to be at least about 0.01 N/50 mm

The protective sheet disclosed herein is suitable as a protective sheet for masking in a plating operation. For example, when a metal (typically a metal having a high electrical conductivity, such as gold or nickel) is plated (e.g., electroplated) onto portions of a workpiece, the protective sheet may be advantageously used in applications where it is attached to non-plating areas and protects those non-plating areas from the plating solution. Such a protective sheet for masking during plating may be advantageously used in operations wherein portions (e.g., connection terminal areas) of a circuit board (e.g., a printed circuit board or FPC) are partially plated. Because the protective sheet according to this invention has a good surface conformability (adherence), infiltration of the plating solution into non-plating areas is suppressed, enabling plating to be precisely applied. For example, in the adherence test described in the subsequent examples, a protective sheet having an average gap length of less than 300 µm (preferably less than 250 µm) is possible. The protective sheet disclosed herein has an excellent handleability. For example, the ease of operation is good when the protective sheet is attached to non-plating areas, or when the protective sheet is peeled following plating. Therefore, by using the protective sheet according to the present invention to carry out masking in a plating operation, high-quality circuit boards can be manufactured at a good productivity.
The protective sheet according to this invention is not limited to applications in which, as described above, areas which are not to be metal plated are protected from the plating solution, and may also be advantageously used in such applications as, for example, protecting (masking) a non-patterned side from the processing solution in a circuit patterning operation.

### EXAMPLES

Several experimental examples of the invention are described below, although these specific examples are not intended to limit the scope of the invention. In the description that follows, unless noted otherwise, all references to "parts" and "%" are based on weight.
The respective properties explained below were each measured or evaluated in the following ways.

### Tensile Modulus

The tensile moduli of the protective sheet were measured as follows.

### (1) Tensile Modulus in MD:

A test piece (MD test piece) in the shape of a strip having a width of 10 mm was cut out in the lengthwise direction of the substrate (MD) from the protective sheet obtained in each example. At this time, a strip was cut out in a form in which the release liner is disposed on the PSA layer (in the form of a protective sheet with release liner), following which the release liner was removed to give the test piece. The MD test piece was stretched under the following conditions in accordance with JIS K7161, thereby giving a stress-strain curve. The tensile modulus was determined from a linear regression of the curve between two specified points at the strains ε₁) = 1 and ε₂ = 2.

### Measurement Conditions

Measurement temperatures: 25°C, 80°C
Test piece width: 10 mm
Test rate: 300 mm/min
Chuck interval: 50 mm

The above measurements were carried out using three test pieces cut out from different places (n = 3), and average values for these were treated as the tensile moduli E1ᵣₜ (measurement temperature, 25°C) and E1ₕₜ (measurement temperature, 80°C) in the MD.

### (2) Tensile Modulus in TD

A test piece (TD test piece) in the shape of a strip having a width of 10 mm was cut out in the widthwise direction (TD; that is, a direction perpendicular to the MD) from the protective sheet obtained in each example. Using this TD test piece, the tensile modulus was determined in the same way as for the MD test piece. The above measurements were carried out using three test pieces cut out from different places, and average values for these were treated as the tensile moduli E2ᵣₜ (measurement temperature, 25°C) and E2ₕₜ (measurement temperature, 80°C) in the TD.

### (3) Total Tensile Modulus

Using the tensile modulus values obtained above, the total tensile modulus at room temperature E_{Trt} was calculated from the formula E_{Trt} = E1ᵣₜ+E2ᵣₜ, and the total tensile modulus at high temperature E_{Tht} was calculated from the formula E_{Tht} = E1ₕₜ+E2ₕₜ.
The tensile modulus of the protective sheet was determined by calculating the value per cross-sectional area of the substrate, based on the thickness value obtained by subtracting the thickness of the PSA layer from the measured thickness of the protective sheet.

### Flexural Rigidity

The flexural rigidity values and the flexural rigidity ratio for the protective sheet were determined as follows.
The thickness (h) of the substrate in the protective sheet of each example and the tensile moduli at 25°C obtained above (E1ᵣₜ, E2ᵣₜ) were inserted into the formula D = Eh³/12(1-V² and the flexural rigidity values D1ᵣₜ and D2ᵣₜ were calculated. A value of 0.35 was employed here as Poisson's ratio V in the above formula. These values were inserted into the formula D_{Trt} = D1ᵣₜ+D2ᵣₜ, and the total flexural rigidity at room temperature D_{Trt} was calculated.
Similarly, the thickness (h) of the substrate in the protective sheet of each example and the tensile moduli at 80°C obtained above (E1ₕₜ, E2ₕₜ) were inserted into the formula D = Eh³/12(1-V²), and the flexural rigidity values D1ₕₜ and D2ₕₜ were calculated (V = 0.35). These values were inserted into the formula D_{Tht} = D 1ₕₜ+D2ₕₜ, and the total flexural rigidity at room temperature D_{Tht} was calculated.
From the values D_{Trt} and D_{Tht} thus obtained, the flexural rigidity ratio D_{R} was calculated using the following formula D_{R} = (D_{Trt}/D_{Tht}).

### 10% Stretch Tension

The tension of the protective sheet when stretched 10% was measured as follows.

### (1) Tension at 10% Stretch in MD

An MD test piece like that used to measure the tensile moduli was prepared. In accordance with JIS K7127, the pulling tension when the above test piece was stretched 10% was measured under the following conditions.

### Measurement Conditions

Measurement temperature: 25°C
Test piece width: 10 mm
Test rate: 300 mm/min
Chuck interval: 50 mm

The above measurements were carried out using three test pieces cut out from different places, and average values for these were treated as the tension T1ᵣₜ when stretched 10% in the MD.

### (2) Tension at 10% Stretch in TD

Using a TD test piece like that used to measure the tensile moduli, the pulling tension when stretched 10% was measured in the same way as described above for the MD test piece. The above measurements were carried out using three test pieces cut out from different places, and average values for these were treated as the tension T2ᵣₜ when stretched 10% in the TD.

### (3) Total 10% Stretch Tension

Using the 10% stretch tension values obtained above, the total 10% stretch tension T_{Trt} was calculated from the formula T_{Trt} = T1ᵣₜ+T2ᵣₜ.
From these results, the dimensional stability of test pieces for which both T1ᵣₜ and T2ᵣₜ were at least 5 N/10 mm was rated as "good," and the dimensional stability of test pieces for which one or both of T1ᵣₜ and T2ᵣₜ was less than 5 N/10 mm was rated as "NG."

Aside from using test pieces in the form of strips having a width of 10 mm that were cut out from the substrate (plastic film) in the MD and the TD, the tension values of the substrate when stretched 10% (t1ᵣₜ, t2ᵣₜ) were measured in the same way as the tension values of the protective sheet when stretched 10%. The total tension of the substrate when stretched 10% at room temperature (t_{Trt}) was calculated by adding together the resulting values t1ᵣₜ and t2ᵣₜ.

### Breaking Strength

The breaking strength was measured by the following methods as an indicator of the resistance of the protective sheet to breaking apart.

### (1) Breaking Strength in MD

MD test pieces like those for measuring the tensile modulus were prepared. In accordance with JIS K 7161, the MD test piece was pulled in the lengthwise direction under the same measurement conditions as for the 10% stretch tension described above, and the load when the test piece broke (load at break) was determined.
The above measurements were carried out using three test pieces cut out from different places (n = 3), and the average value for these was treated as the breaking strength H1ᵣₜ in the MD.

### (2) Breaking Strength in TD

Using TD test pieces like those for measuring the tensile modulus, the load at break was measured in the same way as for the MD test pieces. The above measurements were carried out using three test pieces cut out from different places, and the average value for these was treated as the breaking strength H2ᵣₜ in the TD.

### (3) Total Breaking Strength

Using the breaking strength values obtained as described above, the total breaking strength at room temperature H_{Trt} was computed from the formula H_{Trt} = H1ᵣₜ+H2ᵣₜ. The resistance to breaking apart was rated as "Exc" (particularly resistant to breaking apart) when the H_{Trt} value for the test piece was at least 30 N/10 mm; "Good" (resistant to breaking apart) when H_{Trt} was at least 20 N/10 mm but less than 30 N/10 mm; and "NG" (readily breaks apart) when H_{Trt} was less than 20 N/10 mm.

### Tear Strength

The tear strength was measured by the following methods as an indicator of the resistance of the protective sheet to tearing.

### (1) Tear Strength in MD

Test pieces in the shape of strips having a width of 40 mm and a length of 150 mm (MD test pieces) were cut out in the lengthwise direction (MD) of the protective sheet. In accordance with JIS K6772, a cut was made so as to start at the center of one of the short edges of the test piece and extend for a length of 75 mm parallel to the long edges. The edge of the test piece in which the above cut had been made was set in a tensile testing machine in such a way that the two sides of the cut faced in opposite directions, and pulling was carried out at a measurement temperature of 25°C and a rate of 300 mm/min until the test piece tore in the direction of the cut, at which time the maximum load was determined. The above measurements were carried out using three test pieces cut out from different places, and the average value for these was treated as the breaking strength S1ᵣₜ in the MD.

### (2) Tear Strength in TD

Test pieces in the shape of strips having a width of 40 mm and a length of 150 mm (TD test pieces) were cut in the widthwise direction (TD) of the protective sheet, following which these were subjected to tearing in the same way as for the MD test pieces and the maximum load was determined. The above measurements were carried out using three test pieces cut out from different places, and the average value for these was treated as the breaking strength S2ᵣₜ in the TD.

### (3) Total Tear Strength

Using the tear strength values obtained as described above, the total tear strength at room temperature S_{Trt} was calculated from the formula S_{Trt} = S 1ᵣₜ+S2ᵣₜ. The tear strength was rated as "Exc" (particularly resistant to tearing) when the S_{Trt} value for the test piece was at least 5.0 N; "Good" (resistant to tearing) when S_{Trt} was at least at least 3.0 N but less than 5.0 N; and "NG" (readily tears) when S_{Trt} was less than 3.0 N.

### Adherence

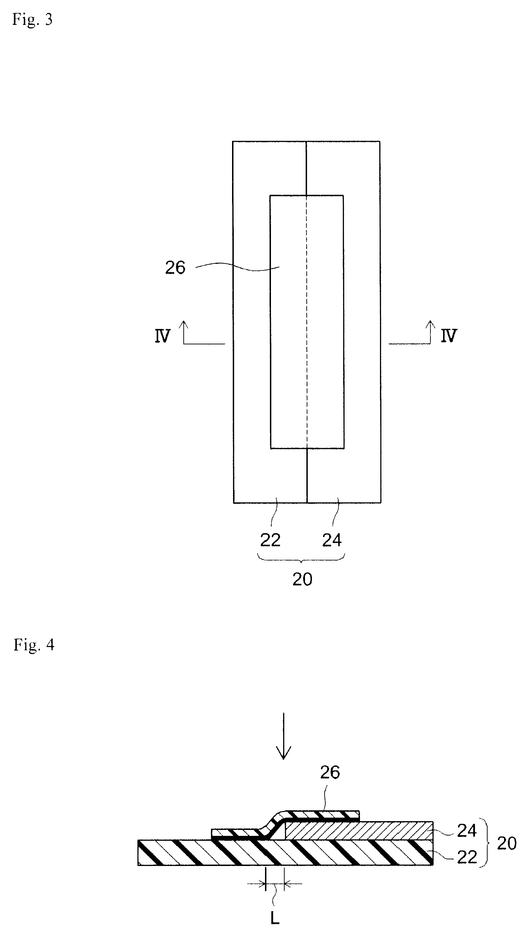

Assuming use in the manner of a protective sheet (protective sheet for masking in a plating operation) employed when plating a flexible printed circuit board (FPC), the adherence to steps (step conformability) between the FPC wiring (typically, copper wires) and the base film was evaluated.
That is, a circuit board 20 composed of copper foil 24 of a thickness of 35 µm that has been patterned on a polyimide film (base film) 22 was prepared as shown in FIGS. 3 and 4. In a separate procedure, a test piece 26 in the form of a strip having a width of 20 mm and a length of 70 mm was cut out along the lengthwise direction (MD) of the protective sheet. This test piece 26 was positioned on the circuit board 20 so that the approximate center of the width is positioned at the boundary between the base film 22 and the copper foil 24, and was lightly bonded thereon with a hand roller.
Next, hot pressing was carried out, thereby making the test piece (protective sheet) 26 closely adhere to the substrate 20. That is, two pieces of a PET film (available from Mitsubishi Polyester Film under the trade name Diafoil MRF38) treated on one side with a silicone-based release agent and cut to the same size as the circuit board 20 were prepared, then arranged with their respective release agent-treated faces on the inside (that is, with the release agent-treated sides facing each other) and placed on the top and bottom of the circuit board 20 to which the test piece 26 had been bonded. In addition, the outer sides of the PET films were sandwiched from above and below between two rubber sheets (made of natural rubber (NBR), and having a thickness of 1.0 mm) cut to the same size as the circuit board 20. This assembly was then hot-pressed at a pressure of 0.34 MPa and 90°C for 5 seconds.
After pressing, the vicinity of the boundary between the base film 22 and the copper foil 24 of the circuit board 20 to which the test piece 26 had been bonded was examined from directly above (in the direction of the arrow in FIG. 4; that is, in a direction perpendicular to the surface of the circuit board 20), and the length L of the gap (the area where the bottom face, or PSA face, of the test piece 26 lifts from the surface of the circuit board 20) present at the step between the copper foil 24 and the base film 22 (see FIG. 4) was measured. The above observation was carried out at a magnification of 100X using a digital microscope manufactured by Keyence Corporation. Measurement of the length L was carried out at places 10 mm, 35 mm and 60 mm from one end of the test piece 26 in the lengthwise direction, and the average of the measurements at these three points was calculated. Because it was confirmed from a separately conducted experiment that plating solution infiltration can be suitably prevented when this gap length is less than 300 µm, the adherence was rated as "Good" when the average value for this gap length was less than 300 µm, and was rated as "NG" when it was 300 µm or more.

### Example 1: Production of Protective Sheet M1

In this example, a polypropylene film (PP film) composed of a resin material (polypropylene resin) blended from polypropylene (PP) as the primary component with polyethylene (PE) and ethylene-propylene rubber (EPR) was used as the substrate. That is, a mixture of 40 parts of crystalline homopolypropylene (HPP) having a resin density of 0.905, 40 parts of random polypropylene (RPP) having a resin density of 0.900, 10 parts of low-density polyethylene (available from Tosoh Corporation under the trade name "Petrocene 205") and 10 parts of ethylene-propylene rubber (EPR) (available from Mitsui Chemicals, Inc. under the trade name "Tafmer P0180") was heated, then extruded by a T-die process to form a 35 µm thick film, and subjected to corona discharge treatment on one side. This PP film (substrate) had a tension t1ᵣₜ at 10% stretch in the MD of 8.2 N/ 10 mm, and a tension t2ᵣₜ at 10% stretch in the TD of 7.4 N/10 mm (the total tension t_{Trt} at 10% stretch was 15.6 N/10 mm). An acrylic PSA composition was coated onto the corona discharge-treated face of this PP film and dried at 80°C for 1 minute, thereby forming a PSA layer having a thickness of about 15 µm. The release side (release agent-treated side) of the release liner was bonded to the surface (PSA side) of the PSA layer, and aged for two days at 50°C, thereby giving Protective Sheet M1 according to this example.

The release liner used above was composed of 115 µm thick high-quality paper laminated on either side with polyethylene resin to a thickness of 20 µm per side and treated on one of the sides (release side) with a silicone release agent.
A formulation prepared by the following method was used as the acrylic PSA composition. A reaction vessel equipped with a condenser, nitrogen inlet, thermometer and stirrer was charged with 33 parts of methyl methacrylate, 3 parts of 2-hydroxyethyl methacrylate, 66 parts of butyl acrylate, 0.1 part of 2,2'-azobis(2-amidinopropane) dihydrochloride as the polymerization initiator, 1.5 parts of sodium dodecylbenzenesulfonate as the emulsifying agent and 100 parts of water, and emulsion polymerization was carried out at 80°C for 5 hours, following which the pH was adjusted to 7.0 using 15% ammonia water. An acrylic copolymer emulsion having a nonvolatiles (NV) content of 50% was obtained in this way. Hydrochloric acid was added to this emulsion to effect salting out, and the resulting coagulate was rinsed with water and dried, thereby giving an acrylic copolymer. This acrylic copolymer was dissolved in toluene to form a solution, and 5 parts of an isocyanate crosslinking agent (available from Nippon Polyurethane Industry Co., Ltd. under the trade name "Coronate L") was added thereto per 100 parts of the copolymer and mixed. In addition, toluene was used to adjust the nonvolatiles content to a specific value, thereby giving the PSA composition.

### Example 2: Production of Protective Sheet M2

The substrate used in this example was a 30 µm thick unoriented polypropylene film which had been corona treated on one side (CPP film). This CPP film had a tension at 10% stretch in the MD (t1ᵣₜ) of 7.2 N/10 mm and a tension at 10% stretch in the TD (t2ᵣₜ) of 7.1 N/10 mm (total tension at 10% stretch (t_{Trt}) was 14.2 N/10 mm). Aside from forming a PSA layer on the corona-treated side of this CPP film, Protective Sheet M2 according to this example was obtained in the same way as in Example 1. The 10% stretch tension of the substrate was measured in the same way as the above-described 10% stretch tension of the protective sheet, but using test pieces cut from the substrate in the shape of 10 mm wide strips (the same applies below).

### Example 3: Production of Protective Sheet M3

The substrate used in this example was 30 µm thick CPP film (CPP film available from SunTox Co., Ltd. under the trade name "MK72") which had been corona treated on one side. This CPP film had a tension at 10% stretch in the MD (t1ᵣₜ) of 6.3 N/10 mm and a tension at 10% stretch in the TD (t2ᵣₜ) of 6.0 N/10 mm (total tension at 10% stretch (t_{Trt}) was 12.3 N/10 mm). Aside from forming a PSA layer on the corona-treated side of this CPP film, Protective Sheet M3 according to this example was obtained in the same way as in Example 1.

### Example 4: Production of Protective Sheet M4

The substrate used in this example was a polyethylene (PE) film. That is, low-density polyethylene (available from Tosoh Corporation under the trade name "Petrocene 180") was formed to a thickness of 40 µm with a blown-film extruder at a die temperature of 160°C, and corona-discharge treated on one side. This PE film had a tension at 10% stretch in the MD (t1ᵣₜ) of 2.7 N/10 mm and a tension at 10% stretch in the TD (t2ᵣₜ) of 2.6 N/10 mm (total tension at 10% stretch (t_{Trt}) was 5.3 N/10 mm). Aside from forming a PSA layer on the corona-treated side of this PE film, Protective Sheet M4 according to this example was obtained in the same way as in Example 1.

### Example 5: Production of Protective Sheet M5

The substrate used in this example was a PP film having a three-layer construction. That is, the HPP used in Example 1 and a compound resin of the RPP used in Example 1 and the above HPP (weight ratio of RPP:HPP = 1:1) were extruded from a T-die so as to form a 40 µm thick three-layer structure composed of a layer of the compound resin sandwiched between two layers of the HPP (thickness ratio of HPP to compound resin to HPP = 1:3:1), and was corona discharge treated on one side. This PP film with a three-layer structure had a tension at 10% stretch in the MD (t1ᵣₜ) of 7.3 N/10 mm and a tension at 10% stretch in the TD (t2ᵣₜ) of 6.6 N/10 mm (total tension at 10% stretch (t_{Trt}) was 13.9 N/10 mm). Aside from forming a PSA layer on the corona-treated side of this PP film, Protective Sheet M5 according to this example was obtained in the same way as in Example 1.

### Example 6: Production of Protective Sheet M6

The substrate used in this example was a polyethylene terephthalate (PET) film having a thickness of 12 µm (available from Toray Industries, Inc. under the trade name "Lumirror S 10"). This PET film had a tension at 10% stretch in the MD (t1ᵣₜ) of 13.5 N/10 mm and a tension at 10% stretch in the TD (t2ᵣₜ) of 11.8 N/10 mm (total tension at 10% stretch (t_{Trt}) was 25.2 N/10 mm). Aside from forming a PSA layer on the corona-treated side of this PET film, Protective Sheet M6 according to this example was obtained in the same way as in Example 1.

Table 1 shows the various characteristics of Protective Sheets M1 to M6 obtained in Examples 1 to 6 that were measured or evaluated by the above-described methods.

**[Table 1]**

| | | Example 1 | Example 2 | Example 3 | Example 4 | Example 5 | Example 6 |
|---|---|---|---|---|---|---|---|
| Substrate material | | PP blend | PP | PP | PE | PP-3 layers | PET |
| Substrate thickness (µm) | | 35 | 30 | 30 | 40 | 40 | 12 |
| PSA layer thickness (µm) | | 15 | 15 | 15 | 15 | 15 | 15 |
| Tensile modulus | E1ᵣₜ | 642.7 | 701.4 | 730.4 | 280.6 | 499.4 | 3,702.7 |
| at 25°C | E2ᵣₜ | 573.4 | 690.5 | 681.0 | 383.4 | 438.6 | 3,706.9 |
| (MPa) | E_{Trt} | 1,216.1 | 1,391.9 | 1,411.4 | 664.0 | 938.0 | 7,409.6 |
| Tensile modulus | E1ₕₜ | 131.9 | 200.3 | 198.6 | 57.1 | 107.8 | 2,706.3 |
| at 80°C | E2ₕₜ | 138.2 | 178.7 | 208.3 | 55.8 | 107.8 | 2,878.0 |
| (MPa) | E_{Tht} | 270.1 | 379.0 | 406.9 | 112.9 | 215.6 | 5,584.3 |
| Flexural rigidity | D1ᵣₜ | 2.6 | 1.8 | 1.9 | 1.7 | 3.0 | 0.61 |
| at 25°C | D2ᵣₜ | 2.3 | 1.8 | 1.7 | 2.3 | 2.7 | 0.61 |
| (x10⁻⁶ Pa·m³) | D_{Trt} | 5.0 | 3.6 | 3.6 | 4.0 | 5.7 | 1.2 |
| Flexural rigidity | D1ₕₜ | 0.54 | 0.51 | 0.51 | 0.35 | 0.66 | 0.44 |
| at 80°C | D2ₕₜ | 0.56 | 0.46 | 0.53 | 0.34 | 0.65 | 0.47 |
| (x 10⁻⁶ Pa.m³) | D_{Tht} | 1.1 | 0.97 | 1.0 | 0.69 | 1.3 | 0.92 |
| Flexural rigidity ratio | D_{R} | 4.5 | 3.7 | 3.5 | 5.9 | 4.4 | 1.3 |
| 10% Stretch tension | T1ᵣₜ | 8.3 | 7.8 | 7.4 | 4.8 | 8.6 | 14.0 |
| at 25°C | T2ᵣₜ | 7.4 | 7.4 | 7.3 | 5.3 | 6.9 | 11.8 |
| (N/10 mm) | T_{Trt} | 15.7 | 35.1 | 14.7 | 10.1 | 15.5 | 25.8 |
| Dimensional stability (rating) | | good | good | good | NG | good | good |
| Breaking strength | H1ᵣₜ | 20.7 | 20.2 | 13.9 | 12.0 | 23.4 | 25.6 |
| at 25 °C | H2ᵣₜ | 11.3 | 14.2 | 6.7 | 7.0 | 10.9 | 21.6 |
| (N/10 mm) | H_{Trt} | 32.0 | 34.5 | 20.6 | 19.1 | 34.3 | 47.2 |
| Resistance to breaking apart (rating) | | Exc | Exc | good | NG | Exc | Exc |
| Tear strength | S1ᵣₜ | 1.2 | 1.9 | 2.0 | 1.4 | 0.8 | 0.1 |
| at 25°C | S2ᵣₜ | 8.2 | 7.1 | 5.4 | 2.7 | 3.5 | 0.1 |
| (N) | S_{Trt} | 9.4 | 9.0 | 7.4 | 4.0 | 4.3 | 0.2 |
| Resistance to tearing (rating) | | Exc | Exc | Exc | good | good | NG |
| Gap length (µm) | | 224 | 281 | 282 | 214 | 302 | 283 |
| Adherence (rating) | | Exc | good | good | Exc | NG | good |

As shown in this table, the protective sheets obtained in Examples 1 to 3, which had a D_{Trt} value of from 3.0×10⁻⁶ to 20x10⁻⁶Pa·m³ (Property (A)), a D_{Tht} value was from 0.10×10⁻⁶ to 1.2x10⁻⁶Pa·m³ (Property (B)), a D_{R} value was from 3.0 to 80 (Property (C)), and T1ᵣₜ and T2ᵣₜ values that were both at least 5.0 N/10 mm (Property (D)) were all confirmed to exhibit a good adherence and a good handleability (more specifically, the dimensional stability, resistance to breaking apart and resistance to tearing were all good). The protective sheets obtained in Examples 1 and 2, which had high H_{Trt} and S_{Trt} values, had outstanding handleabilities. In particular, the protective sheet obtained in Example 1 exhibited an exceptional adherence.

By contrast, the protective sheets obtained in Examples 4 to 6, which did not satisfy at least one of above Properties (A) to (D), were unable to achieve both a high adherence and a high handleability at the same time. For example, the protective sheets in Examples 4 and 6 readily tore or broke apart when peeled from the circuit board, and the protective sheet in Example 5 had a low adherence.

The embodiments thus disclosed in detail above are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A protective sheet, comprising:
a substrate which is a plastic film, and
a pressure-sensitive adhesive layer which is provided on one side of the substrate,
wherein, when defining the flexural rigidity D (units: Pa.m³) of the protective sheet in a predetermined direction as a value determined by the formula D = Eh³/12(1 - V²), where E is a tensile modulus of the protective sheet in the predetermined direction, h is a thickness of the substrate and V is Poisson's ratio for the substrate, all of the following properties are satisfied:
(A) when at 25°C a flexural rigidity in a first direction is defined as D1ᵣₜ and a flexural rigidity in a second direction perpendicular to the first direction is defined as D2ᵣₜ, a total flexural rigidity D_{Trt} at room temperature, represented by D1ᵣₜ + D2ᵣₜ, is from 3.0x10⁻⁶ to 20×10⁻⁶ Pa·m³;
(B) when at 80°C a flexural rigidity in the first direction is defined as D1ₕₜ and a flexural rigidity in the second direction is defined as D2ₕₜ, a total flexural rigidity D_{Tht} at high temperature, represented by D1ₕₜ + D2_{ht,} is from 0.10×10⁻⁶ to 1.2×10⁻⁶ Pa·m³;
(C) the flexural rigidity ratio D_{R}, defined as D_{Trt}/D_{Tht} is from 3.0 to 80; and
(D) the tension T1ᵣₜ when stretched 10% in the first direction at 25°C and the tension T2ᵣₜ when stretched 10% in the second direction at 25°C are each at least 5.0 N/10 mm.

2. The protective sheet according to claim 1, which further satisfies the following property:
(E) when at 25°C a tensile modulus in the first direction is defined as E1ᵣₜ and a tensile modulus in the second direction is defined as E2ᵣₜ, a total tensile modulus E_{Trt} at room temperature, represented by E1ᵣₜ + E2ᵣₜ, is from 800 MPa to 8,000 MPa.

3. The protective sheet according to claim 1 or 2, which further satisfies the following property:
(F) when at 25°C a tear strength in the first direction is defined as S1ᵣₜ and a tear strength in the second direction is defined as S2ᵣₜ, a total tear strength S_{Trt} at room temperature, represented by S1ᵣₜ + S2ᵣₜ, is from 3.0 N to 15 N.

4. The protective sheet according to any one of claims 1 to 3, which further satisfies the following property:
(G) when at 25°C a breaking strength in the first direction is defined as H1ᵣₜ and a breaking strength in the second direction is defined as H2ᵣₜ, a total breaking strength H_{Trt} at room temperature, represented by H1ᵣₜ + H2ᵣₜ, is from 20 to 140 N/ 10 mm.

5. The protective sheet of according to any one of claims 1 to 4, wherein the plastic film is a polypropylene film.

6. The protective sheet of according to any one of claims 1 to 5, wherein the pressure-sensitive adhesive layer is formed of an acrylic pressure-sensitive adhesive in which an acrylic polymer serves as the base polymer, the acrylic polymer is a (co)polymer in which a (meth)acrylic acid ester of an alkyl alcohol with 4 to 10 carbons is copolymerized in an amount of at least 50 mass%.

7. The protective sheet according to any one of claims 1 to 6, wherein the pressure-sensitive adhesive layer is cross-linked by an isocyanate crosslinking agent.

8. The protective sheet according to any one of claims 1 to 7, wherein the pressure-sensitive adhesive layer is formed by coating a pressure-sensitive adhesive composition onto the plastic film, the pressure-sensitive adhesive composition is in a form of solution obtained by dissolving, in an organic solvent, the acrylic polymer obtained by aqueous emulsion.

9. The protective sheet according to any one of claims 1 to 8, wherein the pressure-sensitive adhesive layer is formed by coating a pressure-sensitive adhesive composition onto the plastic film, the pressure-sensitive adhesive composition is in a form of solution obtained by dissolving, in an organic solvent, the acrylic polymer obtained by aqueous emulsion.

10. The protective sheet according to any one of claims 1 to 9, which is a protective sheet to be attached to a non-plating area during metal plating so as to protect the non-plating area from a plating solution.

11. Use of the protective sheet according to any one of claims 1 to 9 for protecting a non-plating area from a plating solution by attaching the protective sheet to the non-plating area during metal plating.
